# EUROPÄISCHE PATENTSCHRIFT

(11) **EP 2 232 096 B1**
(45) Veröffentlichungstag und Bekanntmachung des Hinweises auf die Patenterteilung: **03.08.2011**
(21) Anmeldenummer: 08871046.2
(22) Anmeldetag: 11.12.2008
(51) Int. Cl.: F16F 9/58, B60G 11/52, B60G 17/02, F16F 1/44

(54) **FEDERBEIN MIT SCHRAUBTOPF**
SUSPENSION STRUT HAVING SCREW POT
JAMBE DE SUSPENSION À POT FILETÉ

(30) Priorität: 17.01.2008 DE 102008004887
(43) Veröffentlichungstag der Anmeldung: 29.09.2010
(73) Patentinhaber: Bayerische Motoren Werke Aktiengesellschaft, 80809 München (DE)
(72) Erfinder: SEIDL, Josef, 84130 Dingolfing (DE)
(86) Internationale Anmeldenummer: PCT/EP2008/010495
(87) Internationale Veröffentlichungsnummer: WO 2009/089875

(56) Entgegenhaltungen:
- DE-A1- 3 739 663
- NL-C2- 1 029 266

## Beschreibung

Die Erfindung bezieht sich auf ein Federbein für ein Fahrzeugrad, insbesondere ein Rad eines Motorrades, wie es im Oberbegriff des Anspruchs 1 beschrieben ist.

Ein derartiges Federbein zeigt die NL 1029266 C2. Insbesondere ist in den Figuren 10 bis 12 ein Federbein mit einer Schraubenfeder und einem dazu in Reihe geschaltetem Elastomerblock dargestellt. Der Elastomerblock ist so gestaltet, dass er wenigstens auf einem Teil seiner Länge einen Hohlraum zur äußeren Zylinderwand freilässt, und beim Zusammendrücken kann das Material des Elastomers in diesen Hohlraum ausweichen. Eine konische Stellhülse lässt sich in den Hohlraum einschieben. Dadurch wird dem Elastomer je nach Einstelltiefe der Stellhülse zunehmend die Ausweichmöglichkeit genommen mit der Folge, dass seine Federhärte steigt.

Aufgabe der Erfindung ist es, ein gattungsgemäßes Federbein zu verbessern.

Die Aufgabe wird erfindungsgemäß mit den kennzeichnenden Merkmalen des Hauptanspruchs gelöst. Vorteilhafte Ausgestaltungen ergeben sich aus den Unteransprüchen.

Nach der Erfindung liegt der Elastomerblock an der Außenwand des Dämpfungszylinders an. Er lässt sich dadurch gut positionieren und hat einen definierten Sitz. Bei Einfederungsbewegungen, also wenn er zusammengedrückt wird, beult er sich nach außen, in dem sein Material radial nach außen ausweicht. Beim Nachlassen der eingeleiteten Kraft federt er in seine Ausgangslage zurück. Er bestimmt somit zusammen mit dem ersten Federelement die Gesamtfederrate des Systems.

Der Schraubtopf jedoch verhindert in Abhängigkeit seiner Einstelltiefe zum Elastomerblock dieses Ausbeulen mehr oder weniger stark. Das hat zur Folge, dass sich dadurch auch die Federrate des Elastomerblocks und damit die Gesamtfederrate des Systems verändert. Überdeckt der Schraubtopf den Elastomerblock in seiner ganzen Länge, ist ein Ausbeulen überhaupt nicht mehr möglich. Der Elastomerblock ist bei dieser Einstellung nahezu unelastisch. Stößt dabei der Schraubtopf gegen den Federteller zwischen dem ersten und zweiten Federelement, ist das zweite Federelement - der Elastomerblock - abgeschaltet.

Der Elastomerblock stützt sich gegen einen Anschlag am Zylindergehäuse ab. Dieser Anschlag kann bspw. durch Schweißen oder ähnlichem fest mit dem Zylindergehäuse verbunden sein. Es ist jedoch auch vorteilhaft, ihn gegenüber dem Zylindergehäuse verstellbar zu machen, im einfachsten Falle über eine selbsthemmende Gewindeverbindung. Damit kann der Elastomerblock schon im Ausgangszustand mehr oder weniger stark zusammengedrückt werden, was wiederum seine Federrate verändert. Auf diese Weise lässt sich die Federkennlinie und Vorspannung des Gesamtsystems Federbein in einem bestimmten Bereich zusätzlich verändern.

In einer zweckmäßigen Ausführung ist - vergleichbar wie oben - an dem Federteller zwischen dem ersten Federelement und dem Elastomerblock ein einstellbarer Anschlag für den Schraubtopf vorgesehen. Je nach Höhenstellung des Anschlags stößt bei einer Einfederungsbewegung der Schraubtopf früher oder später gegen diesen Anschlag und schaltet dadurch den Elastomerblock als Federelement ab. Es wirkt dann nur noch das erste Federelement.

Weiter ist es vorteilhaft, diesen Federteller als Federtopf auszubilden mit einem Topfrand, an dem sich je nach Auslegung der zuvor erwähnte Anschlag anbringen lässt. Auch kann der Topfrand zusätzlich als Verschmutzungsschutz für den Elastomerblock dienen. Der Schraubtopf lässt sich dann an dem Topfrand führen. In anderen zweckmäßigen Ausgestaltungen kann hierfür der mit dem Dämpfungszylinder verbundene Anschlag herangezogen werden.

Vorteilhaft kann es auch sein, die Reihenfolge der beiden Federelemente zu vertauschen, das heißt, der Elastomerblock sitzt auf dem mit der Kolbenstange verbunden Federteller und das zweite Federelement - zweckmäßigerweise eine Schraubenfeder - stützt sich am Anschlag des Dämpfungszylinders ab. Durch diese Auslegung ergeben sich weitere Gestaltungsspielräume insbesondere für den zwischen den beiden Federelementen liegenden Federteller.

Weitere vorteilhafte Ausgestaltungen der Erfindung ergeben sich aus der nachfolgenden Beschreibung und der dazu gehörenden Zeichnung. Darin sind dargestellt in
- Figur 1: ein erstes Ausführungsbeispiel eines Federbeins gemäß der Erfindung,
- Figur 2: ein zweites Ausführungsbeispiel eines erfindungsgemäßen Federbeins,
- Figur 3: ein drittes Ausführungsbeispiel eines erfindungsgemäßen Federbeins,
- Figur 4: ein viertes Ausführungsbeispiel eines erfindungsgemäßen Federbeins,
- Figur 5: ein fünftes Ausführungsbeispiel eines erfindungsgemäßen Federbeins und
- Figur 6: ein sechstes Ausführungsbeispiel eines erfindungsgemäßen Federbeins.

Soweit die Bauteile der einzelnen Ausführungsbeispiele die gleichen Funktionen haben, werden sie weitgehend und soweit zweckmäßig mit dem gleichen Bezugszeichen belegt.

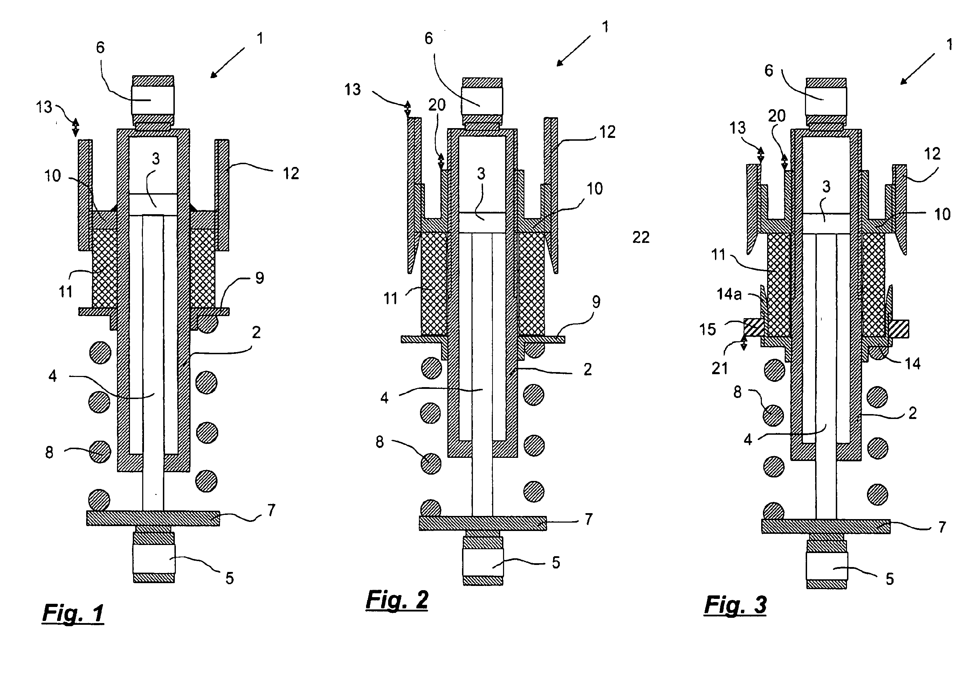

Figur 1 zeigt ein Federbein 1, das Teil einer nicht weiter dargestellten Radaufhängung eines Fahrzeugrades, genauer eines Vorder- oder Hinterrads eines Motorrades ist. Derartige Federbeine sind allgemein bekannt, so dass sich die Darstellung in der Zeichnung lediglich auf die funktionellen Teile beschränkt.

Das Federbein 1 besteht aus einem Dämpfungszylinder 2, in dem ein Dämpfungskolben 3 geführt ist. Am Dämpfungskolben 3 greift eine nach außen führende Kolbenstange 4 an, die an ihrem frei liegenden Abschnitt ein Befestigungsauge 5 für das anzubringende Fahrzeugrad vorsieht. Mit einem ähnlichen Befestigungsauge 6 ist gegenüberliegend der Dämpfungszylinder 2 am Fahrzeugaufbau festgelegt.

Oberhalb seines Befestigungsauges 5 und außerhalb des Dämpfungszylinders 2 trägt die Kolbenstange 4 einen Federteller 7, auf dem das untere Ende einer Schraubenfeder 8 aufliegt. Die Schraubenfeder 8 ist koaxial zum Dämpfungszylinder 2 ausgerichtet und ihre Windungen sind mit ausreichendem Abstand zur Zylinderaußenwand angeordnet. Außerdem erstreckt sich die Schraubenfeder 8 etwa bis zur Mitte der Längsausdehnung des Dämpfungszylinders 2. Dort stützt sie sich an der Unterseite eines weiteren Federtellers 9 ab, der wiederum auf der Zylinderaußenwand des Dämpfungszylinders 2 axial verschiebbar gelagert ist.

Zwischen der Oberseite des Federtellers 9 und einem Anschlag 10 ist ein als weiteres Federelement wirkender Elastomerblock 11 eingespannt, der auf diese Weise mit der Schraubenfeder 8 in Reihe geschaltet ist. Der Elastomerblock 11 weist die Form eines Hohlzylinders auf und liegt mit seiner Innenwand am Außenmantel des Dämpfungszylinders 2 an, ist aber gegenüber diesem in axialer Richtung des Federbeins 1 verschiebbar. Der Anschlag 10 ist durch Schweißen oder mit ähnlicher Verbindungstechnik am Dämpfungszylinder 2 befestigt.

Beim Einfedern des Federbeins wird die Schraubenfeder 8 und durch sie über den axial verschiebbaren Federteller 9 der Elastomerblock 11 gestaucht. Er weicht radial nach außen aus (nicht dargestellt). Beim Ausfedern geht er aufgrund seiner Elastizität wieder die in Fig. 1 gezeigte Grundform zurück.

Ein Schraubtopf 12 ist axial - also wieder in Richtung der Längsachse des Federbeins 1 - verschiebbar an dem Anschlag 10 angeordnet. Hierfür weist der Anschlag 10 ein Außengewinde auf, in das ein in der Innenwandung des Schraubtopfs 12 vorgesehenes Gewinde eingreift. Die axiale Verschiebemöglichkeit ist durch einen Pfeil 13 angedeutet. Der Schraubtopf 12 ist mit seiner Innenkontur der Außenkontur des Elastomerblocks angepasst und so dimensioniert, dass er ohne oder nur mit geringem Spalt den Elastomerblock umfasst, wenn er sich nach unten bewegt.

In Figur 1 befindet sich der Schraubtopf 12 in einer oberen Stellung. Er überdeckt dabei den oberen Abschnitt des Elastomerblocks 11. Bei einem Einfederungsvorgang kann der Elastomerblock 11 - wie oben beschrieben - weitgehend ungehindert radial nach außen ausweichen. Wird der Schraubtopf 12 nach unten bewegt, hindert er immer mehr Bereiche des Elastomerblocks 11 an der radialen Ausformung. Der Elastomerblock 11 wird härter, die Federrate steigt. In seiner unteren Endposition stößt der Schraubtopf 12 mit seiner unteren Stirnseite gegen den Federteller 9. Dadurch ist der Elastomerblock neutralisiert oder abgeschaltet, da sich nunmehr die eingeleitete Kraft über die Schraubenfeder 8, Federteller 9 und Schraubtopf 12 direkt am Anschlag 10 abstützt.

Nach Figur 2 ist der etwas anders gestaltete Schraubtopf 12 wiederum an der Außenseite eines ebenfalls modifizierten Anschlags 10 geführt. Der Anschlag 10 unterscheidet sich gegenüber dem Anschlag nach Fig. 1 neben seiner Form vor allem dadurch, dass er ebenfalls axial abgesenkt werden kann und damit dem Elastomerblock 11 eine mehr ohne weniger große Vorspannung geben kann. Die Verschiebbarkeit symbolisiert der Doppelpfeil 20. Geführt ist der Anschlag 10 über ein Außengewinde im Dämpfungszylinder 2.

Des Weiteren erweitert sich die Innenwandung des Schraubtopfs 12 an ihrem unteren Abschnitt konisch nach außen. Damit ist der beim Einfedern ausweichende Elastomerblock 11 besser vor Verletzungen seines Materials durch die untere, nach außen verlaufende Kante des Schraubtopfs 12 geschützt.

In Figur 3 ist der Federteller zwischen der Schraubenfeder 8 und dem Elastomerblock 11 zu einem Federtopf 14 erweitert mit einem nach oben zeigenden Topfrand 14a. Der Topfrand 14a umfasst den unteren Abschnitt des Elastomerblocks und gibt ihm dadurch einen gewissen Halt. Außerdem trägt der Topfrand 14a einen Anschlag 15 für den Schraubtopf 12. Der Anschlag 15 ist dabei über ein Gewinde am Topfaußenrand axial verstellbar, angedeutet durch einen Doppelpfeil 21.

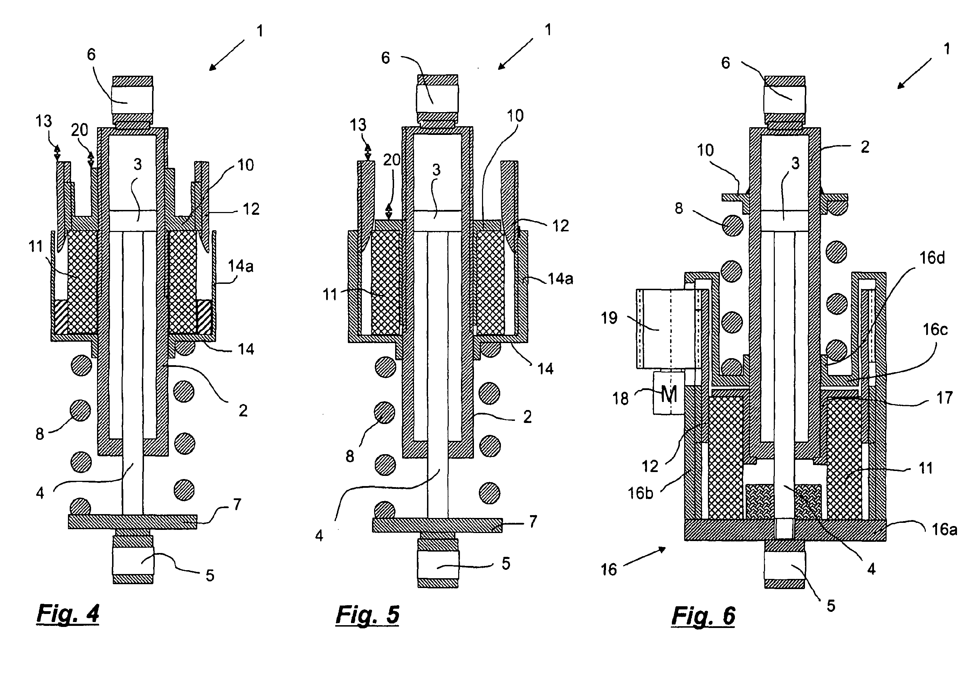

In der Ausführung nach Figur 4 ist der Topfrand 14a des Federtopfs 14 nach oben verlängert, so dass er sich über den Elastomerblock 11 in seiner ganzen Länge überdeckt. Allerdings liegt er am Elastomerblock 11 nicht an, sondern er umfasst ihn mit Abstand. Der dadurch gebildete Hohlraum gibt Platz für den am Anschlag 10 geführten, absenkbaren Schraubtopf 12. Entsprechend ist-demnach der Innendurchmesser des Topfrandes 14a größer als der Außendurchmesser des Schraubtopfes 12.

Nach Figur 5 ist der Schraubtopf 12 nicht an dem Anschlag 10 geführt, sondern an der Innenseite des Topfrandes 14a. Dies geschieht wiederum über eine entsprechende Gewindeverbindung.

Bei dem Ausführungsbeispiel nach Figur 6 sind die Schraubenfeder 8 und der Elastomerblock 11 in ihren Lagen vertauscht und parallel geschaltet. Der Elastomerblock 11 sitzt mit seinem unteren Ende auf der Bodenplatte 16a eines Federtopfs 16, der an der austretenden Kolbenstange 4 befestigt ist. Das obere Ende des Elastomerblocks 11 stützt sich andererseits an einem hutförmigen hülsenartigen Anschlag 17 ab, der an der Außenseite des Dämpfungszylinders 2 in seinem unteren Abschnitt festgelegt ist.

Die Bodenplatte 16a des Federtopfes 16 ist mit einer nach oben verlaufende Topfwand 16b fest verbunden. Die Topfwand 16b reicht über den Elastomerblock 11 hinaus und geht dort in einen Federsitz 16c für die Schraubenfeder 8 über. Hierfür ist die Topfwand 16b an ihrem oberen Rand U-förmig nach unten gebogen und geht dann wieder - den Federsitz 16c ausbildend - in einen Führungsflansch 16d über, mit dem der gesamte Federtopf 16 axial verschiebbar an der Außenwand des Dämpfungszylinders 2 angeordnet ist. Am Federsitz 16c liegt die Schraubenfeder 8 mit ihrem unteren Ende auf, während sich ihr oberes Ende gegen einen Anschlag 10 abstützt, der fest mit dem Dämpfungszylinder 2 verbunden ist.

Die Topfwand 16b ist mit Abstand um die Außenkontur des Elastomerblocks 11 angeordnet. In den dadurch ausgebildeten ringförmigen Hohlraum lässt sich wiederum ein Schraubtopf 12 einschieben, der die radiale Ausdehnungsmöglichkeiten des Elastomerblocks mehr oder weniger stark einschränkt. Der Schraubtopf 12 ist an der Innenseite der Topfwand 16b geführt und wird über einen elektrischen Stellmotor 18 und einer Getriebeeinrichtung 19 in axialer Richtung nach oben bzw. unten bewegt.

## Patentansprüche

1. Federbein für ein Fahrzeugrad, insbesondere für das Rad eines Motorrades mit einem Dämpfungszylinder (2), in dem ein Dämpfungskolben (3) mit einer nach außen geführten Kolbenstange (4) verschiebbar ist, und mit einem um den Dämpfungszylinder (2) angeordneten ersten Federelement sowie mit einem zweiten als Elasto¬merblock (11) ausgelegten und die Form eines Hohlzylinders auf-weisenden Federelement, das in Reihe mit dem ersten Federelement geschaltet und um die Zylinderwand des Dämpfungszylinders (2) angeordnet ist, wobei sich der aus erstem und zweitem Federelement gebildete Verbund einerseits an dem außen liegenden Ende der Kolbenstange (4) und andererseits an einem am Dämpfungszylinders festgelegten Anschlagselement (10) abstützt, **dadurch gekennzeichnet, dass** der Elastomerblock (11) mit seiner Innenwand am Außenmantel des Dämpfungszylinders (2) liegt, an der Außenwand des Dämpfungszylinders (2) axial verschiebbar und ein Schraubtopf (12) in axialer Richtung des Federbeins über die Außenkontur des Elastomerblocks (11) bewegbar ist.

2. Federbein nach Anspruch 1, **dadurch gekennzeichnet, dass** das erste Federelement aus einer koaxial zur Achse der Federbeins angeordneten Schraubenfeder (8) besteht, die mit ihrem unteren Ende auf einer an der Kolbenstange (4) befestigten Federauflage (7) ruht und mit ihrem gegenüberliegenden Ende gegen die Unterseite eines axial verschiebbaren Federtellers (9) stößt, und dass der Elastomerblock (11) zwischen der Oberseite des Federtellers (9) und einem am Dämpfungszylinder vorgesehenen Anschlagelement (10) eingespannt ist.

3. Federbein nach Anspruch 2, **dadurch gekennzeichnet, dass** das Anschlagelement (10) über ein Außengewinde am Zylindermantel des Dämpfungszylinders (2) in der Höhe verstellbar ist.

4. Federbein nach einem der Ansprüche 1 bis 3, **dadurch gekennzeichnet, dass** der Federteller (9) als Anschlag für den abgesenkten Schraubtopf (12) dient.

5. Federbein nach einem der Ansprüche 1 bis 3, **dadurch gekennzeichnet, dass** der Federteller zwischen dem ersten und zweiten Federelement mi einem sich axial nach oben erstreckenden, den Elastomerblock (11) in seiner Längsausdehnung wenigstens teilweise umfassenden Topfrand (14a) zu einem Federtopf (14) ausgebildet ist, der einen mit dem Schraubtopf (12) zusammenwirkenden Anschlag (15) vorsieht.

6. Federbein nach Anspruch 5, **dadurch gekennzeichnet, dass** der Anschlag (15) für den Schraubtopf (12) über ein Außengewinde am Topfrand (14a) höhenverstellbar ist.

7. Federbein nach Anspruch 5 oder 6, **dadurch gekennzeichnet, dass** der Topfrand (14a) die ganze Länge des Elastomerblocks (11) überdeckt und so dimensioniert ist, dass sich zwischen seiner Innenwand und der Außenseite des Elastomerblocks (11) ein Hohlraum für den eindringenden Schraubtopf (12) ausbildet und dass der Innendurchmesser des Topfrandes (14a) größer ist als der Außendurchmesser des Schraubtopfs (12).

8. Federbein nach einem der Ansprüche 2 bis 7, **dadurch gekennzeichnet, dass** der Schraubtopf (12) über eine Gewindeverbindung an der Außenseite des Anschlagelements (10) über den Elastomerblock (11) absenkbar ist.

9. Federbein nach Anspruch 7, **dadurch gekennzeichnet, dass** der Schraubtopf (12) über eine Gewindeverbindung an der Innenseite des Topfrandes (14a) geführt ist.

10. Federbein nach Anspruch 1, **dadurch gekennzeichnet, dass** der Elastomerblock (11) mit seinem oberen Ende an einem am Hohlzylinder (2) festgelegten Anschlag (17) anliegt und sich mit seinem unteren Ende gegen einen mit der Kolbenstange (4) verbunden Federtopf (16) abstützt, dass der Federtopf (16) eine koaxial zum Federbein nach oben verlaufende, den Elastomerblock (11) mit Abstand umgebende Topfwand (16b) aufweist, die einen entlang der Außenseite des Dämpfungszylinder (2) in axialer Richtung bewegbaren Federsitz (16c) für das untere Ende des als koaxial angeordneter Schraubenfeder (8) ausgelegten ersten Federelements vorsieht, wobei die Schraubenfeder (8) mit ihrem entgegen gesetzten Ende an einem zylinderfesten Anschlag (10) anstößt, und der Schraubtopf (12) an der Innenseite des Topfrandes (16b) geführt ist.

11. Federbein nach Anspruch 10, **dadurch gekennzeichnet, dass** der Schraubtopf (12) motorisch bewegt wird.

## Claims

1. A spring leg for a vehicle wheel, especially a motorcycle wheel, comprising a damping cylinder (2) in which a piston (3) is movable on a piston rod (4) guided in the outward direction, a first spring element disposed around the damping cylinder (2) and a second spring element in the form of an elastomer block (11) and in the shape of a hollow cylinder connected in series with the first spring element and disposed around the wall of the damping cylinder (2), wherein the composite comprising the first and second spring element abuts at one end against the outer end of the piston rod (4) and at the other end against a stop element (10) fastened to the damping cylinder, **characterised in that** the inner wall of the elastomer block (11) abuts the outer jacket of the damping cylinder (2) and is axially movable at the outer wall of the damping cylinder (2), and a screw pot (12) is movable in the axial direction of the spring leg over the outer contour of the elastomer block (11).

2. A spring leg according to claim 1, **characterised in that** the first spring element comprises a helical spring (8) coaxial with the axis of the spring leg and with its bottom end resting on a spring rest (7) fastened to the piston rod (4) and its opposite end abuts the underside of an axially movable spring plate (9), and the elastomer block (11) is clamped between the top of the spring plate (9) and a stop element (10) provided on the damping cylinder.

3. A spring leg according to claim 2, **characterised in that** the stop element (10) is vertically adjustable on an external thread on the jacket of the damping cylinder (2).

4. A spring leg according to any of claims 1 to 3, **characterised in that** the spring plate (9) acts as a stop for the screw pot (12) when lowered.

5. A spring leg according to any of claims 1 to 3, **characterised in that** between the first and the second spring element the spring plate has an axially upwardly extending pot edge (14a) at least partially surrounding the elastomer block (11) in its longitudinal extension and forming a spring pot (14) constituting a stop (15) cooperating with the screw pot (12).

6. A spring leg according to claim 5, **characterised in that** the stop (15) for the screw pot (12) is vertically adjustable on an external thread on the pot edge (14a).

7. A spring leg according to claim 5 or 6, **characterised in that** the pot edge (14a) covers the entire length of the elastomer block (11) and is so dimensioned that between its inner wall and the outside of the elastomer block (11) a cavity is formed for the entering screw pot (12), and the inner diameter of the pot edge (14a) is greater than the outer diameter of the screw pot (12).

8. A spring leg according to any of claims 2 to 7, **characterised in that** the screw pot (12) can be lowered via a screwthreaded connection on the outside of the stop element (10) over the elastomer block (11).

9. A spring leg according to claim 7, **characterised in that** the screw pot (12) is guided via a screwthreaded connection on the inside of the pot edge (14a).

10. A spring leg according to claim 1, **characterised in that** the top end of the elastomer block (11) abuts a stop (17) fastened to the hollow cylinder (2) and its bottom end abuts a spring pot (16) connected to the piston rod (4), **in that** the spring pot (16) has a wall (16b) extending coaxially upwards towards the spring leg and surrounding the elastomer block (11) at a distance, the wall (16b) constituting a seat (16c) movable in the axial direction along the outside of the damping cylinder (2) for the bottom end of a first spring element in the form of a coaxial helical spring (8), wherein the opposite end of the helical spring (8) abuts a stop (10) fixed to the cylinder, and **in that** the screw pot (12) is guided on the inside of the pot edge (16b).

11. A spring leg according to claim 10, **characterised in that** the screw pot (12) is motor-driven.

## Revendications

1. Jambe de suspension pour une roue de véhicule, notamment pour la roue d'une moto, comportant un cylindre amortisseur (2) dans lequel coulisse un piston amortisseur (3) avec une tige de piston (4) passant à l'extérieur et un premier élément de ressort installé autour du cylindre amortisseur (2), ainsi qu'un second élément à ressort en forme de cylindre creux ayant un second bloc en élastomère (11) et monté en série avec le premier élément à ressort et installé autour de la paroi du cylindre amortisseur (2),
la combinaison formée du premier et du second élément de ressort s'appuyant d'une part contre l'extrémité extérieure de la tige de piston (4) et d'autre part contre un élément de butée (10) fixé au cylindre amortisseur,
jambe de suspension **caractérisée en ce que**
le bloc d'élastomère (11) s'applique par sa paroi intérieure contre l'enveloppe extérieure du cylindre amortisseur (2), coulisse axialement sur la paroi extérieure du cylindre amortisseur (2) et déplace un pot fileté (12) dans la direction axiale de la jambe de suspension par le contour extérieur du bloc d'élastomère (11).

2. Jambe de suspension selon la revendication 1,
**caractérisée en ce que**
le premier élément de ressort se compose d'un ressort hélicoïdal (8) monté coaxialement à l'axe de la jambe de suspension et dont l'extrémité inférieure repose sur un appui de ressort (7) fixé à la tige de piston (4) et l'extrémité opposée s'appuie contre la face inférieure d'une coupelle à ressort (9) coulissant axialement, et
le bloc d'élastomère (11) est serré entre le côté supérieur de la coupelle de ressort (9) et un élément de butée (10) prévu sur le cylindre amortisseur.

3. Jambe de suspension selon la revendication 2,
**caractérisée en ce que**
l'élément de butée (10) est réglable en hauteur par le filetage extérieur sur l'enveloppe cylindrique du cylindre amortisseur (2).

4. Jambe de suspension selon l'une des revendications 1 à 3,
**caractérisée en ce que**
la coupelle de ressort (9) sert de butée pour le pot fileté (12), abaissé.

5. Jambe de suspension selon l'une des revendications 1 à 3,
**caractérisée en ce que**
la coupelle de ressort est réalisée entre le premier et le second élément de ressort avec un bord de pot (14a) entourant au moins en partie sur sa longueur, le bloc d'élastomère (11) remontant axialement, pour former un pot à ressort (14) comportant une butée (15) coopérant avec le pot fileté (12).

6. Jambe de suspension selon la revendication 5,
**caractérisée en ce que**
la butée (15) pour le pot fileté (12), est réglable en hauteur sur le bord (14) du pot par l'intermédiaire d'un filetage extérieur.

7. Jambe de suspension selon la revendication 5 ou 6,
**caractérisée en ce que**
le bord (14a) du pot couvre toute la longueur du bloc d'élastomère (11) et il est dimensionné pour former une cavité entre sa paroi intérieure et le côté extérieur du bloc d'élastomère (11) pour la pénétration du pot fileté (12), et
le diamètre intérieur du bord (14a) du pot est supérieur au diamètre extérieur du pot fileté (12).

8. Jambe de suspension selon l'une des revendications 2 à 7,
**caractérisée en ce que**
le pot fileté (12) s'abaisse par l'intermédiaire d'une liaison vissée sur le côté extérieur de l'élément de butée (10) par-dessus le bloc d'élastomère (11).

9. Jambe de suspension selon la revendication 7,
**caractérisée en ce que**
le pot fileté (12) est guidé par une liaison filetée sur le côté intérieur du bord (14a) du pot.

10. Jambe de suspension selon la revendication 1,
**caractérisée en ce que**
le bloc d'élastomère (11) est appliqué par son extrémité supérieure contre une butée (17) fixée au cylindre creux (2) et son extrémité inférieure s'appuie contre un pot de ressort (16) relié à la tige de piston (4), le pot de ressort (16) présente une paroi (16b) entourant à distance coaxialement le bloc d'élastomère (11) en remontant coaxialement par rapport à la jambe de suspension, la paroi du pot ayant un siège de ressort (16c) mobile dans la direction axiale le long du côté extérieur du cylindre amortisseur (2) pour l'extrémité inférieure du premier élément de ressort réalisé comme ressort hélicoïdal (8) monté coaxialement,
- le ressort hélicoïdal (8) venant par son extrémité opposée contre une butée (10) solidaire du cylindre, et
- le pot fileté (12) étant guidé contre le côté intérieur du bord (16b) du pot.

11. Jambe de suspension selon la revendication 10,
**caractérisée en ce que**
le pot fileté (12) est déplacé par un moteur.
